# EUROPEAN PATENT APPLICATION

(11) **EP 2 811 419 A2**
(43) Date of publication of application: **10.12.2014**
(21) Application number: 14171192.9
(22) Date of filing: 04.06.2014
(51) Int. Cl.: G06F 21/35

(54) **Apparatus and method for processing data of applet included in a plurality of secure elements**

(30) Priority: 05.06.2013 KR 20130064860
(71) Applicant: Samsung Electronics Co., Ltd, Gyeonggi-do 443-742 (KR)
(72) Inventor: Namkung, Joo, 443-742 Gyeonggi-do (KR); Ko, Jung-Wan, 443-742 Gyeonggi-do (KR); Shin, Kyeong-Seop, 443-742 Gyeonggi-do (KR)
(74) Representative: Jenkins, Richard Gavin

(57) **Abstract**

Disclosed is a method of allowing a main terminal to communicate with a portable terminal comprising first and second secure elements. The method includes: allowing the main terminal to communicate with the portable terminal by using a first applet identifier which is previously recorded in the main terminal; and allowing the main terminal to communicate with the portable terminal by using a second applet identifier which is previously recorded in the main terminal, wherein allowing the main terminal to perform the communication by using the first applet identifier and the allowing the main terminal to perform the communication by using the second applet identifier are alternately and repeatedly carried out.

## Description

### TECHNICAL FIELD

The present disclosure relates to a data exchange technology, more particularly relates to a data exchange technology between a reader and a card.

### BACKGROUND

Recently, the services and functions provided by portable devices have gradually diversified and increased. Various applications which can be carried out in the portable devices have been developed in order to improve an effective value of these portable devices and satisfy different needs of users.

The portable devices can store and carry out basic applications which are programmed and installed thereto by corresponding manufacturers, and additional applications downloaded via the Internet from web sites which sell them. The additional applications have been developed by general developers and can be registered to the web sites. Accordingly, whoever develops applications can freely sell the applications to users of the portable devices via the web sites on which the applications are sold. With respect to current portable devices, thousands and thousands of applications according to products are freely or commercially available.

Portable devices such as smartphones, tablet PCs and the like can store several to hundreds of applications therein, and shortcut keys are displayed in the form of icons on a touch screen of each portable device in order to execute the respective applications. Therefore, if a user touches any one of the icons displayed on the touch screen, the corresponding application is executed in the portable device.

As the portable devices have been widely popularized, data such as personal information or financial information can be stored in the portable terminals and various services which utilize the data are provided for the portable devices. Specifically, the data such as personal information or financial information are intended to be applied to a user certification, a security setting, a financial settlement and so on, by using a Radio-Frequency Identification (RFID) technology including a Near Field Communication (NFC) and the like.

### SUMMARY

With respect to the above, it is a primary object to provide an apparatus and method for stably using an applet, in which data such as personal information or financial information is stored, via secure elements included in a portable terminal.

Another aspect of the present disclosure is to provide an apparatus and method for stably using data such as personal information or financial information, which is stored in an applet, although an identical applet is stored in a plurality of secure elements.

In accordance with an aspect of the present disclosure, a method of allowing a main terminal to communicate with a portable terminal comprising first and second secure elements is provided. The method includes: allowing the main terminal to communicate with the portable terminal by using a first applet identifier which is previously recorded in the main terminal; and allowing the main terminal to communicate with the portable terminal by using a second applet identifier which is previously recorded in the main terminal, wherein the allowing of the main terminal to perform the communication by using the first applet identifier and the allowing of the main terminal to perform the communication by using the second applet identifier are alternately and repeatedly carried out.

Further, in accordance with another aspect of the present disclosure, a method of allowing a portable terminal comprising first and second secure elements, to communicate with a main terminal is provided. The method includes: allowing the portable terminal to receive a requesting message including a first applet identifier, and to communicate with the main terminal; and allowing the portable terminal to receive a requesting message including a second applet identifier, and to communicate with the main terminal.

In accordance with still another aspect of the present disclosure, a main terminal for performing communication with a portable terminal comprising first and second secure elements is provided. The main terminal includes: a Radio Frequency (RF) unit that receives and processes an RF signal; a memory unit that stores at least applet management program; and a controller that is configured to control the applet management program, wherein the memory unit previously stores a first applet identifier and a second applet identifier, and the applet management program includes commands that are configured to repeatedly perform the communication with the portable terminal by alternately using the first applet identifier the second applet identifier.

In accordance with still another aspect of the present disclosure, a portable terminal is provided. The portable terminal includes: first and second secure elements; a Radio Frequency (RF) unit that receives and processes an RF signal; a memory unit that stores an applet management program; and an applet management unit that includes a controller configured to control the applet management program, wherein the applet management program includes commands configured to: receive a requesting message including the first applet identifier and communicating with the main terminal after identifying whether the applet corresponding to the first applet identifier operates; and receive a requesting message including the second applet identifier and communicating with the main terminal after identifying whether the applet corresponding to the second applet identifier operates.

In the communication scheme considering the plurality of secure elements according to the present disclosure, although the identical applet is recorded in each of the plural secure elements included in the portable terminal, the main terminal can stably exchange data necessary for communication with the applet without an occurrence of errors.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 is a schematic view illustrating a system to which a communication scheme is applied considering a plurality of secure elements according to embodiments of the present disclosure;
FIG. 2 is a block diagram illustrating a configuration of a main terminal to which a communication scheme is applied considering a plurality of secure elements according to embodiments of the present disclosure;
FIG. 3 is a view illustrating a configuration of an applet identifier for use in the main terminal to which the communication scheme is applied considering a plurality of secure elements according to embodiments of the present disclosure;
FIG. 4A is a view illustrating applet identifiers which are allocated to secure elements, respectively, according to embodiments of the present disclosure;
FIG. 4B is another view illustrating applet identifiers which are allocated to secure elements, respectively, according to embodiments of the present disclosure;
FIG. 5 is a block diagram illustrating a configuration of a portable terminal to which a communication scheme is applied considering a plurality of secure elements according to embodiments of the present disclosure;
FIG. 6 is a block diagram illustrating a configuration of an applet management unit shown in FIG. 5 according to embodiments of the present disclosure;
FIG. 7 is a flowchart illustrating a communication scheme considering a plurality of secure elements according to embodiments of the present disclosure ; and
FIG. 8 is a flowchart illustrating a communication scheme considering a plurality of secure elements according to embodiments of the present disclosure.

### DETAILED DESCRIPTION

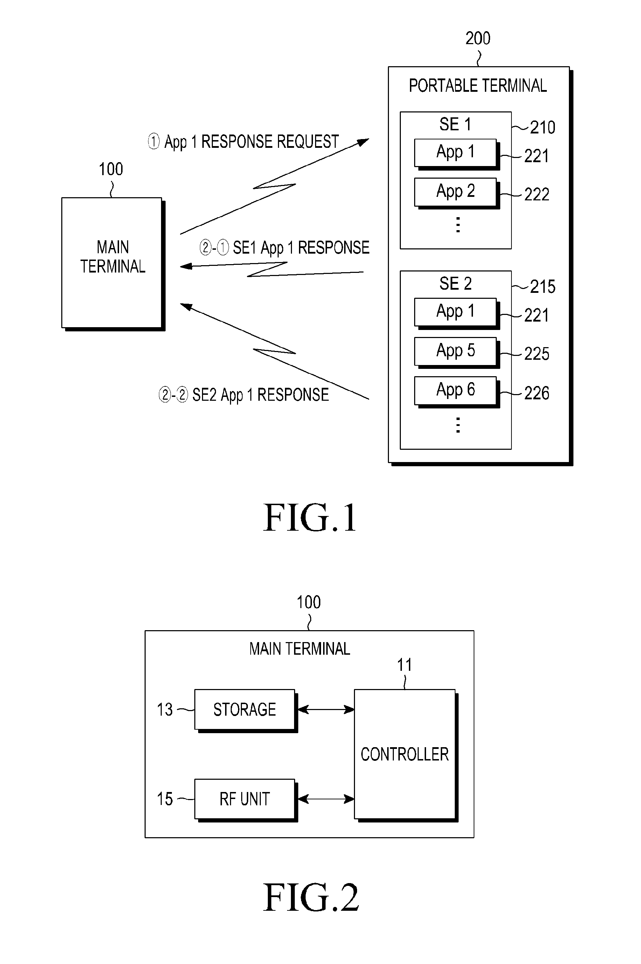

FIGURES 1 through 8, discussed below, and the various embodiments used to describe the principles of the present disclosure in this patent document are by way of illustration only and should not be construed in any way to limit the scope of the disclosure. Those skilled in the art will understand that the principles of the present disclosure can be implemented in any suitably arranged electronic device. The disclosure is described with reference to the accompanying drawings. In the description of the disclosure, a detailed description of known related functions and components can be omitted to avoid unnecessarily obscuring the subject matter of the disclosure. The disclosure can, however, be embodied in many different forms and should not be construed as limited to the embodiments. In addition, terms of the disclosure, which are defined with reference to the functions of the disclosure, can be implemented differently depending on a user or operator's intention and practice. Therefore, the terms should be understood on the basis of the disclosure throughout the specification. The principles and features of the disclosure can be employed in varied and numerous embodiments without departing from the disclosure.

The same reference numbers are used throughout the drawings to refer to the same or similar parts. Furthermore, although the drawings represent embodiments of the disclosure, the drawings are not necessarily to scale and certain features can be exaggerated or omitted in order to more clearly illustrate and describe the disclosure.

Among the terms in the disclosure, an electronic device, a terminal, a portable device, et cetera, refers to any kind of device capable of processing data that is transmitted or received to or from any external entity. The electronic device, the terminal, the portable device, et cetera, can display icons or menus on a screen to which stored data and various executable functions are assigned or mapped. The electronic device, the terminal, the portable device, et cetera can include a computer, a notebook, a tablet PC, a cellphone, and any known type of electronic device.

Among the terms in the disclosure, a screen refers to a display or other output devices which visually display information to the user, and which optionally can include a touch screen or touch panel configured to receive and electronically process tactile inputs from a user using a stylus, a finger of the user, or other techniques for conveying a user selection from the user to the display or to other output devices.

Among the terms in the disclosure, an icon refers to a graphical element such as a figure or a symbol displayed on the screen of the electronic device such that a user can easily select a desired function or data. In particular, each icon has a mapping relation with any function being executable in the electronic device or with any data stored in the electronic device and is used for processing functions or selecting data in the electronic device. When a user selects one of the displayed icons, the electronic device identifies a particular function or data associated with the selected icon. Then the electronic device executes the identified function or displays the identified data.

Among the terms in the disclosure, data refers to any kind of information processed by the electronic device, including text and/or images received from any external entities, messages transmitted or received, and information created when a specific function is executed by the electronic device.

It will be understood that, although the terms first, second, third, etc., can be used to describe various elements, components, regions, layers and/or sections, these elements, components, regions, layers and/or sections should not be limited by these terms. These terms are used to distinguish one element, component, region, layer or section from another region, layer or section. Thus, a first element, component, region, layer or section can be a second element, component, region, layer or section without departing from the teachings of the present disclosure. The terminology used in the present disclosure is for the purpose of describing particular embodiments and is not intended to be limiting of the disclosure. The singular forms "a", "an" and "the" are intended to include the plural forms as well, unless the context clearly indicates otherwise.

FIG. 1 is a schematic view illustrating a system to which a communication scheme is applied considering a plurality of secure elements according to embodiments of the present disclosure. Referring to FIG. 1, the system to which the communication scheme is applied considering the plurality of secure elements according to the embodiment of the present disclosure includes a main terminal 100 operating as a reader and a portable terminal 200 operating as a tag.

The main terminal 100 can read one or more applets 221, 222, 225 and 226 recorded in a plurality of secure elements 210 and 215 included in the portable terminal 200, and communicate with one or more applets 221, 222, 225 and 226 recorded in the plurality of secure elements 210 and 215.

Generally, the main terminal 100 can be configured to communicate with only one of the applets 221, 222, 225 and 226 at once, which are recorded in the plurality of secure elements 210 and 215 included in the portable terminal 200. That is, the main terminal 100 repeatedly transmits an identifier configured to identify one applet, i.e., a first applet 221, to a predetermined range of coverage at a predetermined time interval, and the first applet 221 responds to the identifier when the portable terminal 200 enters the predetermined range of coverage. One or more applets can be provided by a communication service company, a financial service provider, or a manufacturer of the portable terminal. For example, one or more applets can include a VISA credit card applet, a VISA Electron card applet, a MasterCard credit card applet, an Amex credit card applet, a T money applet and the like.

Further, the secure elements can include Universal Integrated Circuit Card (UICC), a Micro Secure Digital (SD) card, an embedded Secure Element (embedded SE), and the like, as a medium configured to store one or more applets, and a plurality of secure elements can be combined with or included in the portable terminal 200. Specifically, an identical applet, i.e., the first applet 221 is simultaneously recorded on the plurality of secure elements. Accordingly, in a state that the identical applet, i.e., the first applet 221 is stored in all of the plurality of secure elements 210 and 215 included in the portable terminal 200, when the main terminal 100 transmits an identifier of the first applet in order to communicate with the first applet 221 recorded in the portable terminal 200 (①), the first applet 221 recorded in the plurality of elements, i.e., a first secure element 210 and a second secure element 215, which are included in the portable terminal 200 can provide response signals simultaneously (②-(①, ②-②). That is, the main terminal 100 receives response messages from the first applet 221 recorded in the first secure element 210 and the first applet 221 recorded in the second secure element 215. In this case, since the main terminal 100 which is configured to perform communication with only one applet at a time cannot simultaneously communicate with the first applets 221 which are recorded in the first and second secure elements 210 and 215 respectively, a problem can occur in that the main terminal 100 recognizes an error and does not carry out more communication operations.

In a system according to embodiments of the present disclosure, to which a communication scheme is applied in consideration of a plurality of secure elements, although identical applets are recorded in the plurality of secure elements respectively, the main terminal 100 can selectively communicate with the applets which are recorded in the plurality of secure elements respectively. Particularly, when the main terminal 100 requests communication with the first applet 221, the main terminal 100 first transmits a first applet identifier, which identifies the first applet 221 recorded on the first secure element 210, to the portable terminal 200. Then, the portable terminal 200 identifies the first applet identifier and allows the main terminal 100 to communicate with the first applet 221 which is recorded in the first secure element 210 and corresponds to the first applet identifier. When communication with the first applet 221 recorded in the first secure elements 210 is completed, the main terminal 100 transmits a second applet identifier, which identifies the first applet 221 recorded in the second secure element 215, to the portable terminal 200. Then, the portable terminal 200 identifies the second applet identifier and allows the main terminal 100 to communicate with the first applet 221 which is recorded in the second secure element 215 and corresponds to the second applet identifier. The main terminal 100 repeatedly communicates with the first applet 221 recorded in each secure element in correspondence to the number of the plural secure elements included in the portable terminal 200. Accordingly, even though the plurality of secure elements are included in the portable terminal 200 and the identical applet is recorded in the plurality of secure elements, the main terminal 100 can exchange data with the applet.

FIG. 2 is a block diagram illustrating a configuration of a main terminal to which a communication scheme is applied considering a plurality of secure elements according to embodiments of the present disclosure;

The main terminal 100 can include a controller 11, a storage unit 13 and a Radio Frequency (RF) unit 15.

The controller 11 can include a CPU, a ROM in which a control program to control the main terminal 100 is stored, and a RAM which stores signals or data input from outside of the main terminal 100, or is used as a storage region for operations performed by the main terminal 100. The CPU, ROM, and RAM can be connected with one another via an internal bus. Further, the controller 11 is configured to control operations of the storage unit 13 and the RF unit 15 depending on a control program for performing a communication scheme in consideration with the plurality of secure elements.

The storage unit 13 can include the ROM and RAM included in the controller 11, or a memory card (not shown), i.e., an SD card and a memory stick, mounted on the main terminal 100. In addition, the storage unit 13 can include a non-volatile memory, a volatile memory, a Hard Disk Drive (HDD), or a Solid State Drive (SSD).

The storage unit 13 can store "a control program for performing a communication scheme in consideration of the plurality of secure elements" to control at least controller 11. "The communication scheme in consideration of the plurality of secure elements" can be implemented in a form of program commands which are performed by various computing devices, and can be stored in the storage unit 13. Further, the storage unit 13 can store the program commands, a data file, a data configuration, and the like individually, or combinations thereof. The program commands stored in the storage unit 13 can be one which is specially designed and configured for the present disclosure, or can be well known and used by a person skilled in the art of computer software. Further, "the communication scheme in consideration of the plurality of secure elements" can be implemented and stored in a form of program commands in the storage unit 13. The program commands can be temporarily stored in the RAM included in the controller 11 according to embodiments of the present disclosure. The controller 11 controls a hardware configuration element included in the main terminal 100 in correspondence to the program commands. The storage unit 13 can temporarily or continuously store data generated during the processing of the program commands.

Especially, the storage unit 13 can store an identifier of applet to be referred in a carrying out of "the control program for performing the communication scheme in consideration of the plurality of secure elements", and the controller 11 identifies the identifier of the applet which is stored in the storage unit 13 and corresponds to an object which performs the communication and can be used for the communication. At this time, an applet identifier is assigned to a single applet, and in a case where the single applet is recorded in the plurality of secure elements, the single applet can be allocated to each of the plural secure elements.

For example, the control program can include program commands that enable the main terminal 100 to sequentially transmit the allocated applet identifier to each of the plural secure elements so as to request a start of communication, and to identify a response signal received from the applet which is stored in the secure element included in the portable terminal, so as to attempt an exchange of data. Particularly, the control program can include program commands that enable the main terminal 100 to transmit an identifier for the first applet, i.e., a first applet identifier, recorded in the first secure element and to stay on standby for a predetermined time, and then allows the main terminal 100 to transmit an identical identifier for the first applet, i.e., the second applet identifier, recorded in the second secure element if a responding message is not received from the first applet recorded in the first secure element, and to stay on standby for the predetermined time. When a response message is received from the first applet recorded in the second secure element in the predetermined time, the program commands enable the main terminal 100 to transmit the first applet identifier again in correspondence to the received response message and to stay on standby for the predetermined time. This operation can be repeatedly performed. On the other hand, the program commands can be configured to enable the main terminal 100 to communicate with the first applet recorded in the first secure element (or the first applet recorded in the second secure element) by using a received response message when the response message is received from the first applet recorded in the first secure element (or the first applet recorded in the second secure element), and to exchange necessary data with the first applet.

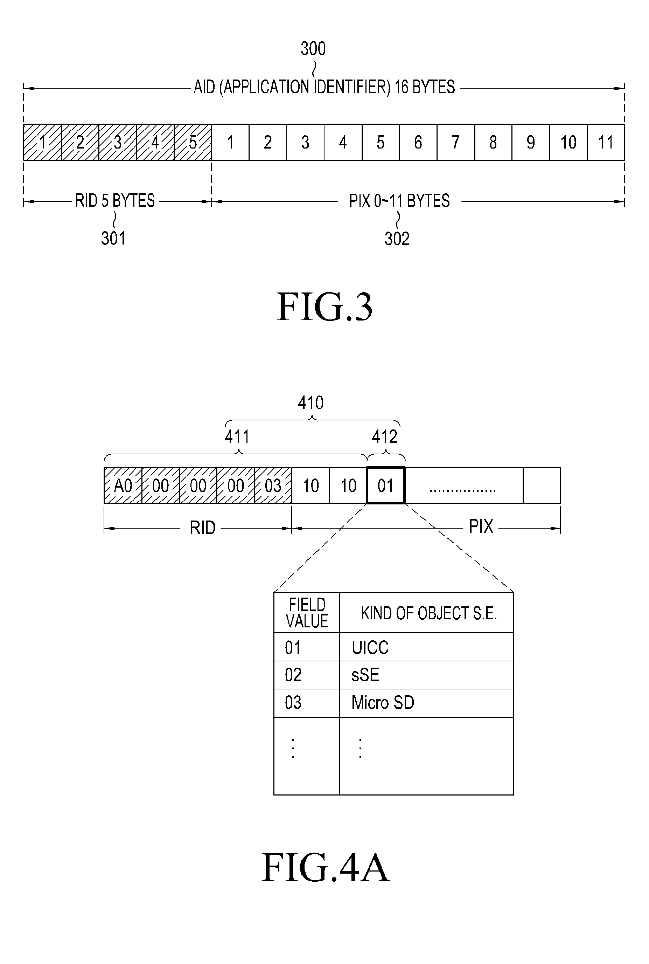

FIG. 3 is a view illustrating a configuration of an applet identifier for use in a main terminal to which a communication scheme considering a plurality of secure elements according to embodiments of the present disclosure. FIGS. 4A to 4B are views illustrating an applet identifier allocated to each of the plural secure elements according to embodiments of the present disclosure.

Referring to FIG. 3, the applet identifier 300 is a unique ID value of each applet, and includes information which allows the main terminal to distinguish applet services (application) loaded on the secure element through the identifier. The applet identifier 300 can include a Registered Application Provider Identifier (RID) 301 and a Propriety Application Identifier Extension (PIX) 302.

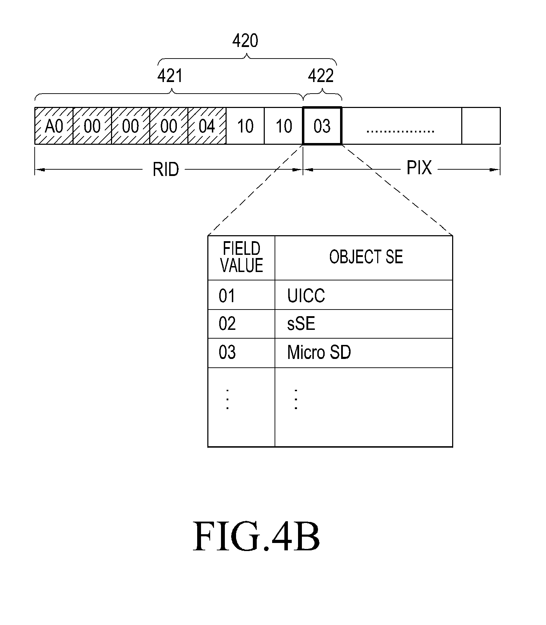

Referring to FIG. 4A and 4B, FIG. 4A illustrates an applet identifier used as a VISA credit. The first applet identifier 410 which is used as the VISA credit can include an applet type identifier 411 for identifying an applet, and an SE type identifier 412 for identifying a secure element. The applet type identifier 411 includes an RID of 5 Bytes and a PIX of 2 Bytes, and the SE type identifier 412 includes a PIX of 1 Byte. For example, the applet type identifier 411 can include information, i.e., a field value of A0 00 00 00 03 10 10, indicating that the applet is the VISA credit, and the SE type identifier 412 can include information, i.e., a field value of 01, indicating that a secure element is a UICC. Moreover, the SE type identifier 412 included in the applet identifier 410 has a field value set in consideration of the secure element recorded in the applet. In a case where the secure element is the UICC, the SE type identifier 412 is set to "01", in a case where the secure element is an embedded-Secure Element (e-SE), the SE type identifier 412 is set to "02", and in a case where the secure element is a Micro SD, the SE type identifier 412 is set to "03".

Likewise, FIG. 4B illustrates an applet identifier used as a MasterCard credit. The second applet identifier 420 used as the MasterCard credit can include an applet type identifier 421 for identifying an applet and an SE type identifier 422 for identifying a secure element, similarly to the first applet identifier 410. The applet type identifier 421 includes an RID of 5 Bytes and a PIX of 2 Bytes. The SE type identifier 422 includes a PIX of 1 Byte. For example, the applet type identifier 421 can include information, i.e., a field value of A0 00 00 00 04 10 10, indicating that the applet is the VISA credit, and the SE type identifier 422 can include information, i.e., a field value of 01, indicating that a secure element is a UICC. As shown in FIG. 4A, the SE type identifier 422 has a field value set in consideration of the secure element in which the applet is recorded.

On the other hand, the controller 11 can wirelessly communicate with the portable terminal 200 located in a predetermined region by using the applet identifier, and the RF unit 15 can include a configuration, i.e., an antenna, an RF transmission a reception circuit, and the like, configured to transmit and receive a signal for performing the wireless communication with the portable terminal 200. The communication with the portable terminal 200 can be carried out by using various schemes such as a cellular scheme, a wireless LAN scheme and a short-range communication scheme. Preferably, in the present disclosure, the communication with the portable terminal 200 is performed by using a communication scheme such as a Radio-Frequency Identification (RFID) scheme and a Near Field Communication (NFC) scheme.

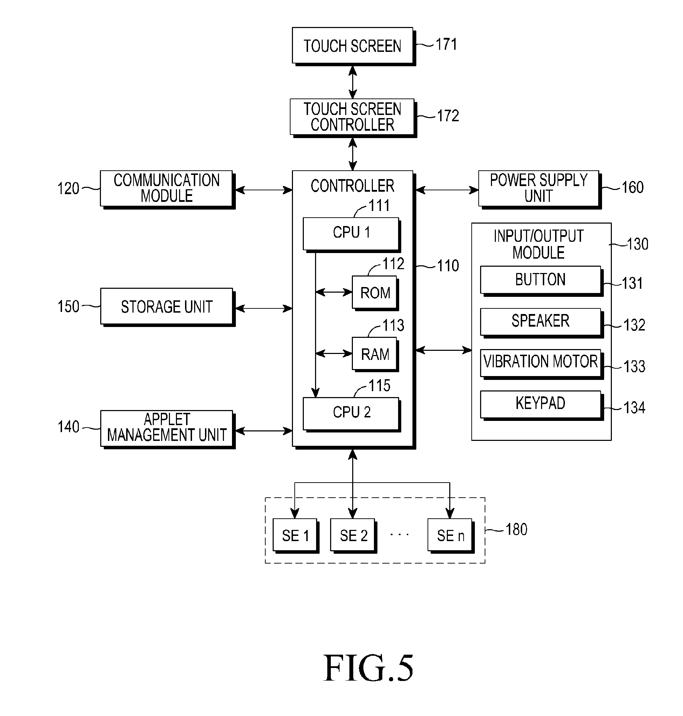

FIG. 5 is a block diagram illustrating a configuration of a portable terminal to which a communication scheme is applied considering a plurality of secure elements according to embodiments of the present disclosure.

Referring to FIG. 5, the portable terminal 200 to which the communication scheme considering the plurality of secure elements according to embodiments of the present disclosure is applied generally includes the controller 110, a communication module 120, an input/output (I/O) module 130, a storage unit 150, an electric power supply unit 160, a touch screen 171 and a touch screen controller 172. Also, the portable terminal 200 can further include an applet management unit 140.

The controller 110 can include a Central Processing Unit (CPU) 111, a second CPU 115, a Read Only Memory (ROM) 112 storing a control program for controlling the portable terminal 200, and a Random Access Memory (RAM) 113, which temporarily stores signals or data received from the outside of the portable terminal 200, or is used as a storage area for the operations performed in the portable terminal 200. The CPU 111, ROM 112 and RAM 113 can be interconnected via an internal bus. The controller 110 can control the communication module 120, the I/O module 130, the storage unit 150, the power supply 160, the touch screen 171, and the touch screen controller 172. The controller 110 can be comprised of a single core, or can be comprised of multiple cores such as dual cores, triple cores, and quad cores. It will be apparent to those of ordinary skill in the art that the number of cores is subject to change depending on the characteristics of the terminal.

The communication module 120 can include at least one of a cellular module, a Wireless Local Area Network (WLAN) module, and a short-range communication module.

The cellular module is configured to connect the portable terminal 200 to the external device by mobile communication via at least one or more antennas (not shown), under control of the controller 110. The cellular module exchanges wireless signals for voice calls, video calls, Short Message Service (SMS) messages and/or Multimedia Messaging Service (MMS) messages, with cellular phones (not shown), smart phones (not shown), tablet Personal Computers (PCs) (not shown) and/or other devices (not shown), whose phone numbers are stored or registered in the portable terminal 200.

The WLAN module, under control of the controller 110, can be connected to the Internet in the place where a wireless Access Point (AP) (not shown) is installed. The WLAN module supports the WLAN standard (IEEE802.11x) defined by Institute of Electrical and Electronics Engineers (IEEE). The WLAN module can drive the Wi-Fi Positioning System (WPS) that identifies location information of the terminal equipment with the WLAN module, using the location information provided by a wireless AP to which the WLAN module is wirelessly connected.

The short-range communication module, a module that wirelessly handles short-rang communication with the portable terminal 200 under control of the controller 110, can handle communication based on short-range communication such as Bluetooth, Infrared Data Association (IrDA), WiFi-Direct, and Near Field Communication (NFC).

The I/O module 130 can include at least one of a button 131, a speaker 132, a vibration motor 133, and a keypad 134.

The button 131 can be formed on the front, side and/or rear of the housing of the portable terminal 200, and can include at least one of a power/lock button (not shown), a volume button (not shown), a menu button (not shown), a home button (not shown), a back button (not shown), and a search button (not shown).

The speaker 132, under control of the controller 110, can output the sounds corresponding to various signals (for example, wireless signals, broadcast signals and the like) from the cellular module, the WLAN module and the short-range communication module, to the outside of the portable terminal 200. One or multiple speakers 132 can be formed in one or multiple proper positions of the housing of the portable terminal 200.

The vibration motor 133 can convert electrical signals into mechanical vibrations under control of the controller 110. One or multiple vibration motors 133 can be formed in the housing of the portable terminal 200.

The speaker 132 and the vibration motor 133 can operate depending on the set state of the volume operating mode of the portable terminal 200. For example, the volume operating mode of the portable terminal 200 can be operated as a sound mode, a vibration mode, a sound & vibration mode, and a silent mode, and can be set as one of these modes. Based on the set volume operating mode, the controller 110 can output the signal instructing the operation of the speaker 132 or the vibration motor 133 depending on the function performed by the portable terminal 200. For example, the controller 110 can output a sound signal and a vibration signal to the speaker 132 and the vibration motor 133, respectively, in response to a touch action by the user on the touch screen 171, and/or a continuous movement of a touch on the touch screen 171.

The storage unit 150, under control of the controller 110, can store signals or data, which are input/output to correspond to operations of the communication module 120, the I/O module 130, and the touch screen 171. The storage unit 150 can store a variety of applications and a control program for control of the portable terminal 200 or the controller 110.

The term 'storage' as used herein can include the storage unit 150, the ROM 112 and RAM 113 in the controller 110, and a memory card (not shown) (for example, a Secure Digital (SD) card, a memory stick) mounted in the portable terminal 200. The storage can include a non-volatile memory, a volatile memory, a Hard Disk Drive (HDD), a Solid State Drive (SSD) and the like.

The power supply unit 160, under control of the controller 110, can supply the power to one or multiple rechargeable batteries (not shown) mounted in the housing of the portable terminal 200. The one or multiple batteries (not shown) supply power to the portable terminal 200. The power supply unit 160 can supply the power received from the external power source (not shown) to the portable terminal 200 through a wired cable that is connected to a connector mounted in the portable terminal 200. The power supply unit 160 can supply, to the portable terminal 200, the power that is wirelessly received from the external power source by wireless charging technology.

The touch screen 171 can display User Interfaces (UIs) corresponding to various services (for example, calls, data transmission and the like) for the user, based on the terminal's Operation System (OS). The touch screen 171 can transfer an analog signal corresponding to at least one touch entered on a UI, to the touch screen controller 172. The touch screen 171 can receive at least one touch input through the user's body (for example, fingers including the thumb) and/or a touch input device (for example, a stylus pen). The touch screen 171 can receive a continuous movement input of one among at least one touch. The touch screen 171 can transfer an analog signal corresponding to a continuous movement of an input touch, to the touch screen controller 172.

The touch screen 171 can be implemented in, for example, a resistive type, a capacitive type, an infrared type, or an acoustic wave type.

The touch screen controller 172 controls output values of the touch screen 171 so that the display data provided from the controller 110 can be displayed on the touch screen 171. The touch screen controller 172 converts analog signals received from the touch screen 171 into digital signals (for example, X/Y coordinates) and transfers them to the controller 110. The controller 110 can control the touch screen 171 using the digital signals received from the touch screen controller 172. For example, in response to a touch event or a hovering event, the controller 110 can select or execute a related shortcut icon (not shown) displayed on the touch screen 171. The touch screen controller 172 can be incorporated into the controller 110.

On the other hand, the applet management unit 140 processes a data exchange between the main terminal 100 and the applet recorded in the plurality of secure elements 180 included in the portable terminal 200 via communication with the main terminal 100, or provides data, which is provided by the applet recorded in the plurality of secure elements 180, to the main terminal 100.

For example, the applet management unit 140 controls an operation of recording at least one applet in the plurality of secure elements 180, or sets up an activation/inactivation of the at least one applet recorded in the plurality of secure elements 180 so as to provide an environment, i.e., UI and menus, to store information on the setting (information on at least one identifier recorded in the plurality of secure elements 180, the activation/inactivation of the at least one applet and the like). The applet management unit 140 identifies an applet identifier which is issued periodically, and also identifies whether an applet corresponding to the identified applet identifier is recorded in the plurality of secure elements 180, and information on the activation/inactivation of the corresponding applet. When the applet corresponding to the identified applet identifier is recorded in the plurality of secure elements 180 and is activated, the applet management unit 140 transmits a response message relating to the activated applet to the main terminal 100, so as to provide environment in which the corresponding applet exchanges data with the main terminal 100.

Furthermore, the applet management unit 140 stores information used for identifying at least one applet recorded in the plurality of secure elements 180, and identifies which applet and secure element a received applet identifier corresponds to as receiving the applet identifier periodically issued by the main terminal 100. The information used for identifying the at least one applet recorded in the plurality of secure elements 180 can have a configuration and a field value shown in FIGS. 3, 4A and 4B. For example, when a value of an applet type identifier (an identifier used for identifying a type of an applet) included in the received applet identifier is "A0 00 00 00 03 10 10", and a value of an SE type identifier (an identifier used for identifying a type of a secure element) is "01", the applet management unit 140 identifies that the corresponding applet is a VISA credit, and the corresponding secure element is a UICC. Moreover, the applet management unit 140 identifies whether a VISA credit card applet is recorded in the UICC and whether the VISA credit card applet recorded in the UICC is activated into an available state, and perform an operation of exchanging data with the main terminal 100.

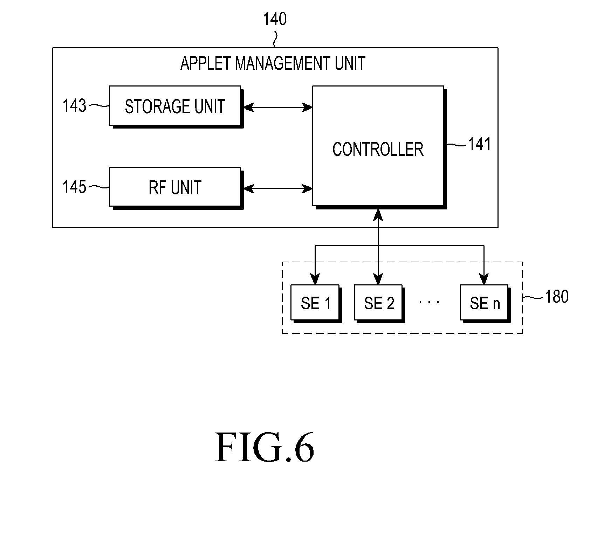

FIG. 6 is a block diagram illustrating a configuration of an applet management unit shown in FIG. 5 according to embodiments of the present disclosure. Referring to FIG. 6, the applet management unit 140 can include a controller 141 and a Radio Frequency (RF) unit 145.

The controller 141 can include a CPU, a ROM in which "a control program for processing a communication scheme considering the plurality of secure elements" is stored, and a RAM which stores signals or data input from outside of the portable terminal 200, or is used as a storage region for operations performed by the portable terminal 200. The CPU, ROM, and RAM can be connected with one another via an internal bus. Further, the controller 141 is configured to control operations of the storage unit 143 and the RF unit 145 depending on a control program for performing a communication scheme in consideration with the plurality of secure elements.

In embodiments of the present disclosure, "the control program for performing the communication scheme considering the plurality of secure elements" is stored in the ROM provided to an inside of the controller 141, but the present disclosure is not limited to the embodiment. For example, "the control program for performing the communication scheme considering the plurality of secure elements" can be stored in a storage unit 143, i.e., an SD card, a memory stick, a non-volatile memory, a volatile memory, a Hard Disk Drive (HDD), and a Solid State Drive (SSD), which is separately provided to the applet management unit 140.

"The communication scheme in consideration of the plurality of secure elements" can be implemented in a form of program commands that are performed by various computing devices, and can be stored in the storage unit 143. The program commands can be specially designed and configured for the present disclosure, or can be well known and used by a person skilled in the art of computer software. Further, "the communication scheme considering the plurality of secure elements" can be temporarily stored in a form of program commands in the RAM included in the controller 141. The controller 141 controls structural hardware elements in correspondence to the program commands, and temporarily and continuously stores data generated during the processing of the program commands in the storage unit 143.

Specifically, the ROM or RAM included in the controller 141, or the storage unit 143 can store an applet identifier to be used when "the control program to perform the communication scheme considering the plurality of secure elements" is executed. When receiving an applet identifier from the storage unit 143, the controller 141 identifies the applet identifier received from the storage unit 143 and uses the applet identifier in communication with the main terminal 100. At this time, the applet identifier includes an applet type identifier allocated to identify an applet, and an SE type identifier allocated to identify a secure element. The applet type identifier includes information which indicates a kind of applet, and the SE type identifier includes information which indicates a kind of secure applet. Accordingly, the controller 141 identifies the applet type identifier and the SE type identifier, and identifies the kind of secure element and the kind of applet which correspond to the received applet identifier. Then, the controller 141 controls the applet recorded in the identified secure element to communicate with the main terminal 100.

On the other hand, the RF unit 145 can include a configuration, i.e., an antenna, an RF signal transmitting and receiving circuit, and the like, configured to transmit and receive a signal to perform wireless communication with the main terminal 100. The communication with the main terminal 100 can be carried out by using various schemes including a cellular scheme, a wireless LAN scheme, a short-range communication scheme and the like. Preferably, in the present disclosure, the communication with the main terminal 100 is performed using a communication scheme such as a Radio-Frequency Identification (RFID) scheme and a Near Field Communication (NFC) scheme.

Moreover, the applet management unit 140 can be included in the controller 110 and the like of the portable terminal 200, or can be configured with separate hardware, i.e., an NFC chip, an RFID chip, and the like. For example, when the applet management unit 140 is included in the controller 110 and the like of the portable terminal, the controller 110 of the portable terminal 200 can carry out a function of the controller 141 included in the applet management unit 140 if necessary. The ROM 112 or RAM 113 included in the controller 110, or the storage unit 150 is employed as the storage unit 143 of the applet management unit 140, and the RF unit 145 can be included in a communication module 120.

As shown in FIG. 1, the communication scheme considering the plurality of secure elements is configured to solve a problem which can occur as an identical applet is recorded in the plurality of secure elements.

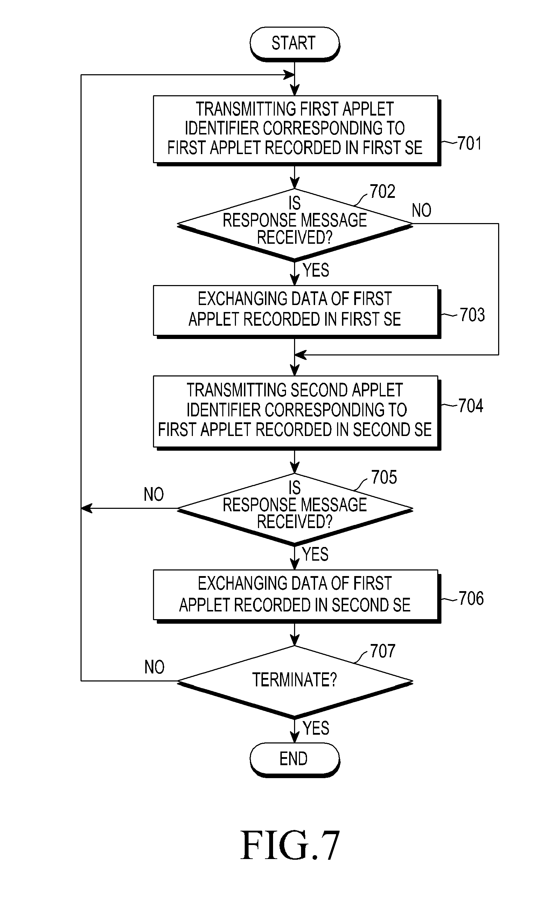

FIG. 7 is a flowchart illustrating the communication scheme considering the plurality of secure elements according to embodiments of the present disclosure, and illustrates a process of the communication scheme which is performed by the main terminal.

Hereinafter, an operational process of the communication scheme considering the plurality of secure elements, which is performed by the main terminal, will be described with reference to FIG. 1 and FIG. 7. In the description of the operation of the communication scheme considering the plurality of secure elements, which is performed by the main terminal, it is illustrated that an applet which the main terminal 100 can support is a first applet 221, and a secure element which the main terminal 100 can support is a first secure element 210, i.e., a UICC, and a second secure element 215, i.e., an embedded Secure Element.

Firstly, in step 701, a controller 11 of the main terminal 100 identifies an identifier (hereinafter, referred to as an first applet identifier) to identify the first applet 221, which is recorded in the first secure element 210, i.e., a UICC, from a storage unit 13, in consideration of the applet with which the main terminal 100 can communicate. Further, the controller 11 broadcasts the first applet identifier through the RF unit 15.

Then, in step 702, the controller 11 transmits the first applet identifier and stays in a standby state for a predetermined time. When the controller 11 receives a response message from the first applet 221 corresponding to the first applet identifier within the predetermined time, the controller 11 performs step 703. Otherwise, when the controller does not receive a response message from the first applet 221 corresponding to the first applet identifier within the predetermined time, the controller performs step 704. The response message can include at least one of the applet identifier, an available period of the applet, and/or a setting value of a protocol used as an interface for the applet. In step 703, the controller 11 exchanges data with the first applet 221 recorded in the first secure element 210, i.e., a UICC. For example, in a case where the first applet 221 includes an applet such as a credit card including a VISA credit card, a MasterCard credit card, and the like, and a transportation card including a T money card and the like, which is used for a financial payment, the controller 11 exchanges data, which is necessary for the financial payment, with the first applet 221 depending on a predetermined protocol for the financial payment.

Next, in step 704, the controller 11 identifies an identifier (hereinafter, referred to as a second applet identifier) to identify the first applet 221 which is recorded in the second secure element 215, i.e., an embedded Secure Element, from the storage unit 13. Further, the controller 11 broadcasts the second applet identifier through an RF unit 15.

Then, in step 705, the controller 11 transmits the second applet identifier and stays in standby mode for a predetermined time. When the controller 11 receives a response message from the first applet 221 corresponding to the second applet identifier within the predetermined time, the controller 11 performs step 707. Otherwise, when the controller 11 does not receive a response message from the first applet 221 corresponding to the second applet identifier within the predetermined time, the controller performs step 701.

In step 706, the controller 11 performs operation of exchanging data with the first applet 221 recorded in the second secure element 215, i.e., an embedded secure element. Step 706 is performed in an identical manner to the above mentioned step 703, except that the data is exchanged with the first applet 221 recorded in the second secure element 215.

Next, the controller 11 can perform the steps 701 to 706 repeatedly until the main terminal 100 is terminated, via step 707.

In the communication scheme considering the plurality of secure elements according to embodiments of the present disclosure, the first applet identifier and the second applet identifier are repeatedly transmitted, but the present disclosure is not limited to the above description. Although the identical applet is recorded in the plurality of secure elements, the present disclosure allocates the applet identifier so that it is distinguished in that the secure elements in which the applet is recorded are different from one another. Accordingly, in embodiments of the present disclosure, the secure elements with which the main terminal 100 can communicate include the UICC and the embedded Secure Element. However, a number and a kind of secure elements with which the main terminal 100 is configured to communicate can be variously set. In embodiments of the present disclosure, the first applet is illustrated as an applet, but also the number and the kind of applets can vary. Furthermore, in a case where the number and the kind of secure elements and applets are variously set, of course, the controller 11 identifies one or more applet identifiers which are repeatedly transmitted, according to the number and kind of secure elements and applets which are variously set, and sequentially broadcasts the identified applet identifiers.

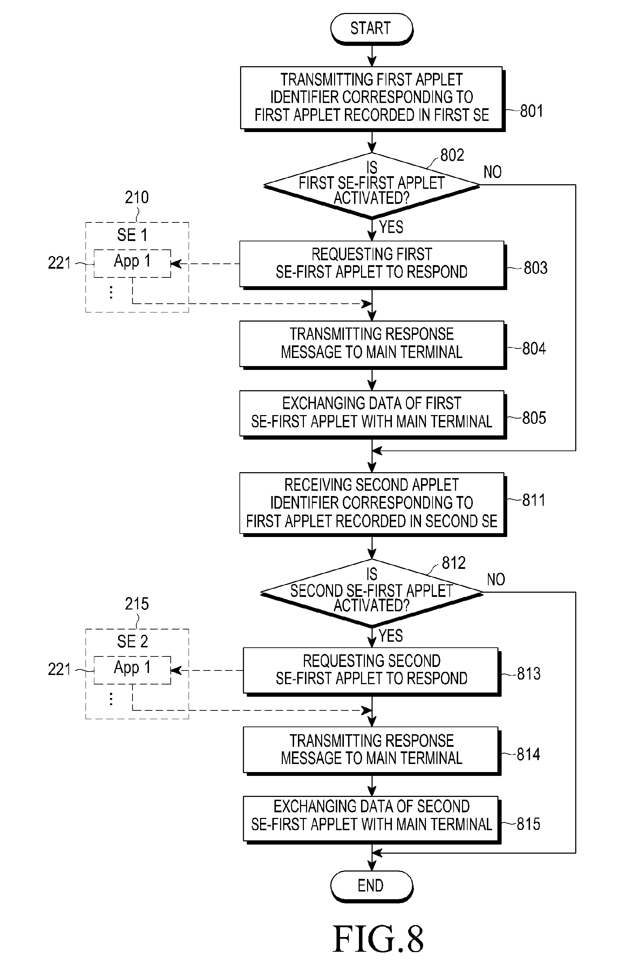

FIG. 8 is a flowchart illustrating the communication scheme considering the plurality of secure elements according to embodiments of the present disclosure, and illustrates a process of the communication scheme which is performed by the portable terminal.

Firstly, in the communication scheme, as the portable terminal receives an RF signal provided from the main terminal 100, the applet management unit 140 can start its operation. For example, the starting of the operation of the applet management unit 140 is based on the RFID technology.

In step 801, the applet management unit 140 receives an identifier (hereinafter, referred to as a first applet identifier) to identify the first applet 221 recorded in the first secure element 210, i.e., a UICC, which is broadcast from the main terminal 100. Continuously, the applet management unit 140 identifies an applet type identifier and an SE type identifier which are included in the first applet identifier, so as to identify corresponding applet and secure element.

Next, when at least one applet is recorded in the plurality of secure elements included in the portable terminal 200, all of one or more applets which are recorded in the plurality of secure elements are activated in an available state. Preferably, the applet management unit 140 provides a user with an environment in which the user determines the use of one or more applets which are recorded in the plurality of secure elements. According to a setting input by the user, the applet management unit 140 can store a setting with relation to activation of one or more applets which are recorded in the plurality of secure elements. In step 802, therefore, it is identified whether the applet corresponding to the first applet identifier, i.e., the first applet 221 of the first secure element 210, stays in an activated state. Moreover, in a case where all of the one or more applets which are recorded in the plurality of secure elements are activated and set in the available state, it is possible to omit step 802.

Next, in step 803, the applet management unit 140 transmits a message requesting communication with an applet corresponding to the first applet identifier which is received, i.e., the first applet 221 of the first secure element 210, and receives a response message from the first applet 221 of the first secure element 210.

In step 804, the applet management unit 140 transmits the response message, which is received from the first applet 221 of the first secure element 210, to the main terminal 100. In step 805, then, the applet management unit 140 performs an exchange of data necessary for the communication between the main terminal 100 and the first applet 221 of the first secure element 210. For example, in a case where the first applet 221 includes an applet such as a credit card including a VISA credit card, a MasterCard credit card, and the like, and a transportation card including a T money card and the like, which is used for a financial payment, data, i.e., certification information, payment information, and the like, which are necessary for the financial payment is exchanged depending on a predetermined protocol for the financial payment.

Next, in step 811, the applet management unit 140 receives an identifier (hereinafter, referred to as a second applet identifier) to identify the first applet 221 which is recorded in the second secure element 215, i.e., an embedded Secure Element, from the main terminal 100 which repeatedly transmits the plurality of applet identifiers. Continuously, the applet management unit 140 identifies an applet type identifier and an SE type identifier which are included in the second applet identifier, so as to identify corresponding applet and secure element.

In step 812, it is identified whether the applet corresponding to the first applet identifier, i.e., the first applet 221 of the second secure element 215, stays in an activated state. Moreover, in a case where all of the one or more applets recorded in the plurality of secure elements are activated and set in the available state, it is possible to omit step 812.

Next, in step 813, the applet management unit 140 transmits a message requesting communication with an applet, i.e., the first applet 221 of the second secure element 215, corresponding to the second applet identifier which is received, and receives a response message from the first applet 221 of the second secure element 215.

In step 814, the applet management unit 140 transmits the response message, which is received from the first applet 221 of the second secure element 215, to the main terminal 100. In step 815, then, the applet management unit 140 performs an exchange of data necessary for communication between the main terminal 100 and the first applet 221 of the second secure element 215. For example, in a case where the first applet 221 includes an applet such as a credit card including a VISA credit card, a MasterCard credit card, and the like and a transportation card including a T money card and the like, which is used for a financial payment, data, i.e., certification information, payment information, and the like, which are necessary for the financial payment can be exchanged depending on a predetermined protocol for the financial payment.

In embodiments of the present disclosure, the first applet identifier and the second applet identifier are received via steps 801 to 815, however, the present disclosure is not limited to the above description. For example, the portable terminal 200 can further include at least another secure element as well as the first and second secure elements. Of course, it is possible to repeatedly perform operations corresponding to the above mentioned steps with respect to at least another secure element.

As described above, even though the identical applet is recorded in each of the plural secure elements included in the portable terminal by the communication scheme considering the plurality of secure elements, it is possible that the main terminal and the applet can stably exchange the data necessary for the communication without an occurrence of error.

It will be appreciated that the embodiments of the present disclosure can be implemented in a form of hardware, software, or a combination of hardware and software. The software can be stored as program instructions or computer readable codes executable on the processor on a computer-readable medium. Examples of the computer readable recording medium include magnetic storage media (e.g., ROM, floppy disks, hard disks, etc.), and optical recording media (e.g., CD-ROMs, or DVDs). The computer readable recording medium can also be distributed over network coupled computer systems so that the computer readable code is stored and executed in a distributed fashion. This media can be read by the computer, stored in the memory, and executed by the processor. The methods of the present disclosure can be implemented by a computer or portable terminal including a controller and a memory, and the memory can be an example of the computer readable recording medium suitable for storing a program or programs having instructions that implement the embodiments of the present disclosure. The present disclosure can be implemented by a program having codes for embodying the apparatus and method described in claims, the program being stored in a machine (or computer) readable storage medium. The program can be electronically carried on any medium, such as communication signals transferred via wired or wireless connection, and the present disclosure suitably includes its equivalent.

The portable terminal can receive and store the program from a program provider on wired or wirelessly connected thereto. The program provider can include a memory for storing a program having instructions to carry out the method, information required for the method, etc., a communication unit for conducting wired or wireless communication, and a controller for controlling transmission of the program. The program provider can provide the program to the portable terminal on wired or wirelessly at request of the portable terminal. The program provider can also provide the program to the portable terminal on wired or wirelessly even without request from the portable terminal, e.g., if the portable terminal is located within a particular range.

Although the present disclosure has been described with an exemplary embodiment, various changes and modifications may be suggested to one skilled in the art. It is intended that the present disclosure encompass such changes and modifications as fall within the scope of the appended claims.

## Claims

1. A method of allowing a main terminal to communicate with a portable terminal comprising first and second secure elements, the method comprising:
allowing the main terminal to communicate with the portable terminal by using a first applet identifier which is previously recorded in the main terminal; and
allowing the main terminal to communicate with the portable terminal by using a second applet identifier which is previously recorded in the main terminal,
wherein the allowing of the main terminal to perform the communication by using the first applet identifier and the allowing of the main terminal to perform the communication by using the second applet identifier are alternately and repeatedly carried out.

2. The method as claimed in claim 1, wherein the first applet identifier identifies a first applet recorded in the first secure element, and the first applet identifier identifies the first applet recorded in the second secure element.

3. The method as claimed in claim 2, wherein the allowing of the main terminal to communicate with the portable terminal by using the first applet identifier comprises:
allowing the main terminal to transmit a requesting message including the first applet identifier to the portable terminal including the first secure element; and
allowing the main terminal to receive a response message from the portable terminal including information on whether an applet corresponding to the first applet identifier operates.

4. The method as claimed in claim 3, wherein operation of the applet corresponding to the first applet identifier indicates that the first applet is recorded in the first secure element.

5. The method as claimed in claim 3, wherein operation of the applet corresponding to the first applet identifier indicates that the first applet recorded in the first secure element indicates that the first applet is activated.

6. The method as claimed in claim 3, comprising allowing the main terminal to exchange data with the applet corresponding to the first applet identifier through the portable terminal if the response message includes information which indicates that the applet corresponding to the first applet identifier operates.

7. The method as claimed in claim 3, wherein the allowing the main terminal to communicate with the portable terminal by using the first applet identifier is terminated if the response message includes information which indicates that the applet corresponding to the first applet identifier does not operate.

8. The method as claimed in claim 1, wherein the first applet identifier includes an applet type identifier to identify a kind of the first applet, and a secure element type identifier to identify a kind of the first secure element, and wherein the second applet identifier includes an applet type identifier to identify a kind of the first applet, and a secure element type identifier to identify a kind of the second secure element.

9. A method of allowing a portable terminal comprising first and second secure elements, to communicate with a main terminal, the method comprising:
allowing the portable terminal to receive a requesting message including a first applet identifier, and to communicate with the main terminal; and
allowing the portable terminal to receive a requesting message including a second applet identifier, and to communicate with the main terminal.

10. The method as claimed in claim 9, wherein the first applet identifier identifies a first applet recorded in the first secure element, and the first applet identifier identifies the first applet recorded in the second secure element.

11. The method as claimed in claim 10, wherein the allowing of the portable terminal to receive the requesting message and to communicate with the main terminal, comprises:
identifying whether the applet corresponding to the first applet identifier operates;
allowing the portable terminal to exchange data of the applet corresponding to the first applet identifier with the main terminal, if the applet corresponding to the first applet identifier operates; and
allowing the portable terminal to terminate a communication with relation to the applet corresponding to the first applet identifier, if the applet corresponding to the first applet identifier does not operate.

12. The method as claimed in claim 11, wherein operation of the applet corresponding to the first applet identifier indicates that the first applet is recorded in the first secure element.

13. The method as claimed in claim 11, wherein operation of the applet corresponding to the first applet identifier indicates that the first applet which is recorded in the first secure element indicates that the first applet is activated.

14. A main terminal for performing communication with a portable terminal comprising first and second secure elements, the main terminal comprising:
a Radio Frequency (RF) unit that receives and processes an RF signal;
a memory unit that stores an applet management program; and
a controller that is configured to control the applet management program,
wherein the memory unit previously stores a first applet identifier and a second applet identifier, and the applet management program includes commands that are configured to to repeatedly perform the communication with the portable terminal by alternately using the first applet identifier and the second applet identifier.

15. A portable terminal comprising:
first and second secure elements;
a Radio Frequency (RF) unit that receives and processes an RF signal;
a memory unit that stores an applet management program; and
an applet management unit that includes a controller configured to control the applet management program,
wherein the applet management program includes commands configured to:
receive a requesting message including the first applet identifier and communicating with the main terminal after identifying whether the applet corresponding to the first applet identifier operates; and
receive a requesting message including the second applet identifier and communicating with the main terminal after identifying whether the applet corresponding to the second applet identifier operates.
